(19) Europäisches Patentamt / European Patent Office / Office européen des brevets

(11) **EP 4 454 626 A1**

(12) **EUROPEAN PATENT APPLICATION**
published in accordance with Art. 153(4) EPC

(43) Date of publication:
**30.10.2024 Bulletin 2024/44**

(21) Application number: **23753045.6**

(22) Date of filing: **31.01.2023**

(51) International Patent Classification (IPC):
*A61H 1/02* (2006.01)   *B25J 9/00* (2006.01)
*B25J 9/16* (2006.01)   *A61H 37/00* (2006.01)

(52) Cooperative Patent Classification (CPC):
**A61H 1/0244; A61H 1/02; A61H 3/00; A61H 37/00;
B25J 9/00; B25J 9/16;** A61H 2003/007;
A61H 2201/1215; A61H 2201/1642;
A61H 2201/5007; A61H 2201/5069; A61H 2230/625

(86) International application number:
**PCT/KR2023/001381**

(87) International publication number:
**WO 2023/153694 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.02.2022 KR 20220018375
26.09.2022 KR 20220121696**

(71) Applicant: **Samsung Electronics Co., Ltd
Suwon-si, Gyeonggi-do 16677 (KR)**

(72) Inventor: **SEO, Keehong
Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD FOR DETERMINING VALUE OF CONTROL PARAMETER, AND ELECTRONIC DEVICE FOR PERFORMING SAME METHOD**

(57)   A wearable device according to an embodiment may generate a walking pattern of a user on the basis of a joint angle, output a torque corresponding to the walking pattern on the basis of a first value of a control parameter, determine a first value of an objective function for a first torque pattern for the output torque, calculate a second torque pattern corresponding to a walking pattern for a second value changed on the basis of the first value of the control parameter, determine a second value of the objective function for the second torque pattern, and determine an optimum value of the control parameter on the basis of the second value of the objective function.

FIG. 7

EP 4 454 626 A1

## Description

## TECHNICAL FIELD

The present application relates to technology for controlling wearable devices.

## BACKGROUND ART

A change into aging societies has contributed to a growing number of people who experience inconvenience and pain from reduced muscular strength or joint problems due to aging. Thus, there is a growing interest in walking assist devices that enable elderly users or patients with reduced muscular strength or j oint problems to walk with less effort.

## DISCLOSURE OF THE INVENTION

## TECHNICAL SOLUTIONS

According to an embodiment, a wearable device may include a processor configured to control a wearable device, at least one sensor configured to measure a joint angle of a thigh support frame, a motor driver circuit controlled by the processor, a motor electrically connected to the motor driver circuit, and the thigh support frame configured to transmit a torque generated by the motor to at least a portion of a lower limb of a user, wherein the processor may perform generating a walking pattern of the user wearing the wearable device based on the joint angle, outputting a torque corresponding to the walking pattern based on a first value of a control parameter, determining a first value of an objective function for a first torque pattern for the output torque, calculating a second torque pattern corresponding to the walking pattern for a second value changed based on the first value of the control parameter, determining a second value of the objective function for the second torque pattern, determining an optimal value of the control parameter based on the second value of the objective function.

According to an example embodiment, a method of determining a value of a control parameter, performed by a wearable device, may include generating a walking pattern of a user wearing the wearable device based on a joint angle of a thigh support frame of the wearable device, outputting a torque corresponding to the walking pattern based on a first value of a control parameter, determining a first value of an objective function for a first torque pattern for the output torque, calculating a second torque pattern corresponding to the walking pattern for a second value changed based on the first value of the control parameter, determining a second value of the objective function for the second torque pattern, and determining an optimal value of the control parameter based on the second value of the objective function.

According to an example embodiment, an electronic device may include a communication module configured to exchange data with an external device, and at least one processor configured to control the electronic device, wherein the processor may perform receiving a joint angle of a thigh support frame from a wearable device connected to the electronic device, generating a walking pattern of a user wearing the wearable device based on the joint angle, receiving information about a torque corresponding to the walking pattern output based on a first value of a control parameter, determining a first value of an objective function for a first torque pattern for the torque, calculating a second torque pattern corresponding to the walking pattern for a second value changed based on the first value of the control parameter, determining a second value of the objective function for the second torque pattern, determining an optimal value of the control parameter based on the second value of the objective function, and transmitting the optimal value of the control parameter to the wearable device.

## BRIEF DESCRIPTION OF DRAWINGS

FIG. 1 is a diagram illustrating a configuration of a system for providing a user with an exercise program, according to an example embodiment.
FIG. 2 is a block diagram of an electronic device in a network environment, according to an example embodiment.
FIGS. 3a, 3b, 3c, and 3d are diagrams illustrating a wearable device, according to an example embodiment.
FIG. 4 is a diagram illustrating a wearable device communicating with an electronic device, according to an example embodiment.
FIGS. 5 and 6 are diagrams illustrating a torque output method of a wearable device, according to an example embodiment.
FIG. 7 is a flowchart of a method of determining a value of a control parameter to control a wearable device, according to an example embodiment.
FIG. 8 illustrates a joint angle pattern and a joint angular velocity pattern of a walking pattern, according to an example embodiment.
FIG. 9 is a flowchart of a method of outputting a torque corresponding to a walking pattern based on a first value of a control parameter, according to an example embodiment.
FIG. 10 illustrates a first torque pattern, according to an example embodiment.
FIG. 11 is a flowchart of a method of calculating a second torque pattern corresponding to a walking pattern for a second value changed based on a first value of a control parameter, according to an example embodiment.
FIG. 12 illustrates torque patterns and powers calculated based on the torque patterns according to an example embodiment.

FIG. 13 is a flowchart of a method of outputting a torque based on an optimal torque pattern determined based on an optimal value of a control parameter according to an example embodiment.

FIG. 14 illustrates values of control parameters that change according to a walking speed of a user, according to an example embodiment.

FIG. 15 is a flowchart of a method of determining a value of a control parameter to control a wearable device, performed by an electronic device, according to an example embodiment.

## BEST MODE FOR CARRYING OUT THE INVENTION

Hereinafter, various example embodiments of the present disclosure will be described with reference to the accompanying drawings. However, this is not intended to limit the present disclosure to specific embodiments, and it should be understood that various modifications, equivalents, and/or alternatives of the embodiments of the present disclosure are included.

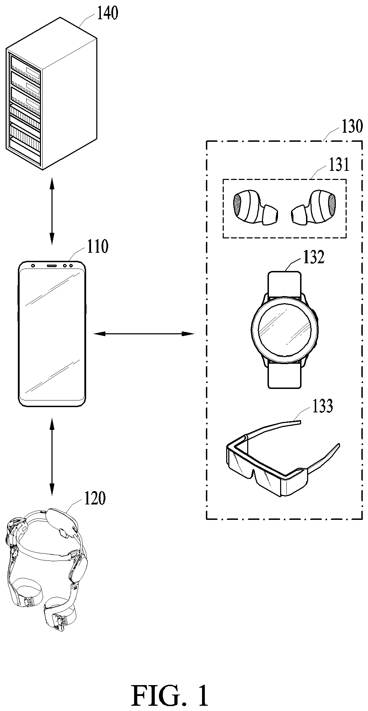

FIG. 1 is a diagram illustrating a configuration of a system for providing a user with an exercise program according to an embodiment.

According to an embodiment, a system 100 for providing a user with an exercise program may include an electronic device 110, a wearable device 120, an additional device 130, and a server 140.

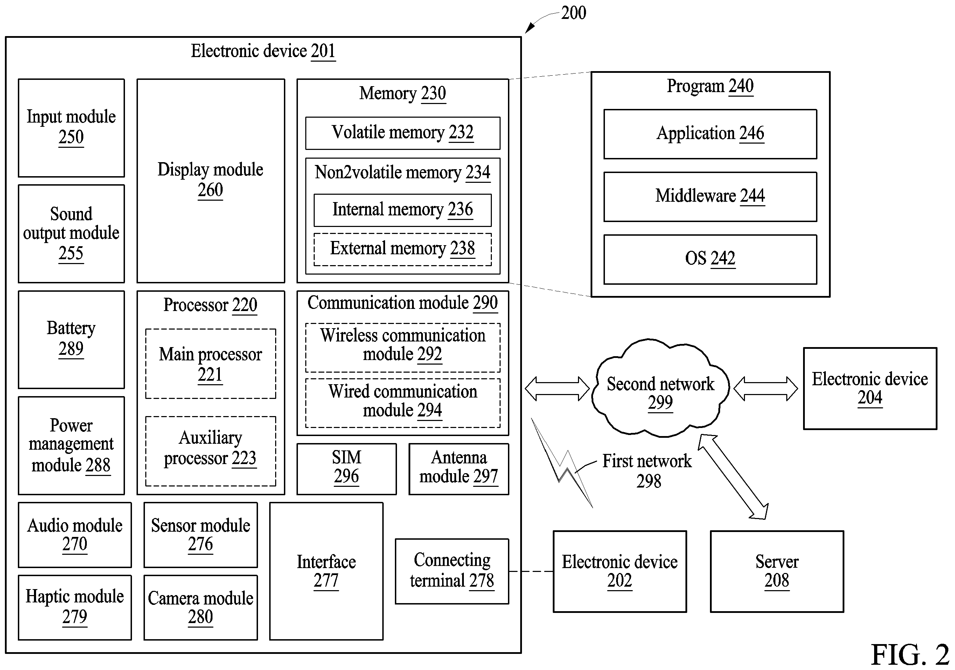

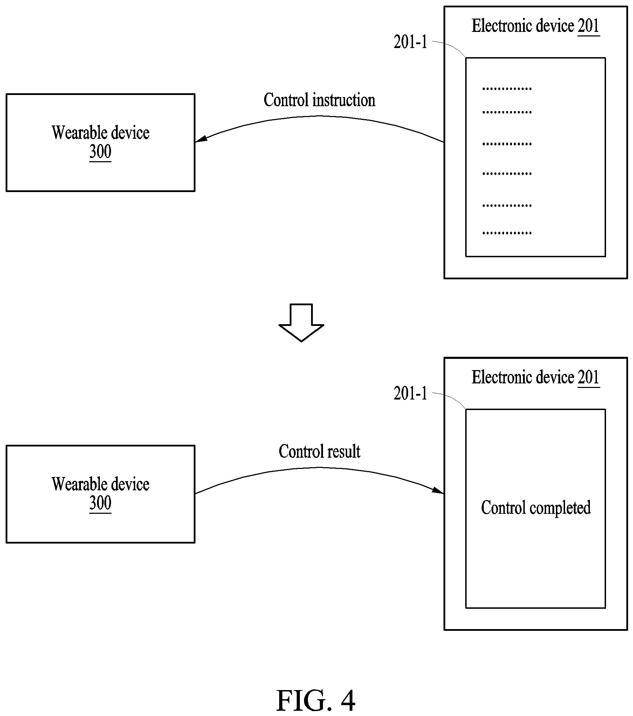

According to an embodiment, the electronic device 110 may be a user terminal that may be connected to the wearable device 120 using short-range wireless communication. For example, the electronic device 110 may transmit a control signal for controlling the wearable device 120 to the wearable device 120. The electronic device 110 will be described in detail below with reference to FIG. 2, and the transmission of a control signal will be described in detail below with reference to FIG. 4.

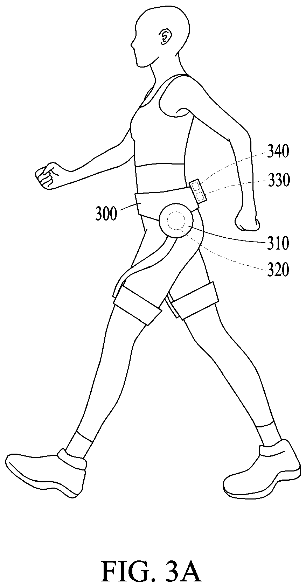

According to an embodiment, the wearable device 120 may provide a user wearing the wearable device 120 with an assistance force for assisting a gait or a resistance force for impeding a gait. The resistance force may be provided to the user to assist the user in doing an exercise. The values of various control parameters used in the wearable device 120 may be controlled to control the assistance force or the resistance force output by the wearable device 120. The structure and driving method of the wearable device 120 will be described in detail below with reference to FIGS. 3a, 3b, 3c, 3d, 4, 5, and 6.

According to an embodiment, the electronic device 110 may be connected to the additional device 130 (e.g., wireless earphones 131, a smart watch 132, or smart glasses 133) using short-range wireless communication. For example, the electronic device 110 may output information indicating the state of the electronic device 110 or the state of the wearable device 120 to the user through the additional device 130. For example, feedback information with respect to a walking state of the user wearing the wearable device 120 may be output through a haptic device, a speaker device, and a display device of the additional device 130.

According to an embodiment, the electronic device 110 may be connected to the server 140 using short-range wireless communication or cellular communication. For example, the server 140 may include a database in which information about a plurality of exercise modes to be provided to a user through the wearable device 120 is stored. An exercise mode may be based on a motion control model for controlling the wearable device 120 to provide the user with a torque appropriate for a target motion of the user. For example, the server 140 may manage a user account of the user of the electronic device 110 or the wearable device 120. The server 140 may store and manage an exercise mode performed by the user and a result of performance with respect to the exercise mode in link with the user account.

According to an embodiment, the system 100 may provide the user with an exercise program for a motion desired by the user. For example, the motion desired by the user may be a standardized in-place exercise such as a squat, a lunge, or a kickback. For example, the motion desired by the user may be an exercise arbitrarily made by the user.

According to an embodiment, when the user wearing the wearable device 120 performs a motion, the exercise mode may provide the user with a force (or a torque) preset to correspond to the motion through the wearable device 120. For example, the force provided to the user may be an assistance force. For example, the force provided to the user may be a resistance force. The output timing and magnitude of the force provided to the user by the wearable device 120 may be controlled by the user modifying the existing exercise mode or authoring a new exercise mode.

According to an embodiment, the motion control model may control the wearable device 120 to provide an exercise mode to the user. For example, the exercise mode may include a walking mode, a running mode, and the like, and is not limited to the described embodiments. For example, the motion control model may be a model that controls the wearable device 120 so that a torque corresponding to a motion of the user is output through the wearable device 120. The motion control model may output the torque based on the values of control parameters. For example, the control parameters may include primary parameters to adjust at least one of the magnitude, direction, and timing of a torque to be output through the wearable device 120, the sensitivity to joint angles of the wearable device 120, or an offset angle between joint angles. For example, the control parameters may include secondary parameters expressed as combinations of the above primary parameters. For example, the secondary parameters may be parameters indicating the degree to which an existing torque pattern for a corresponding exercise mode is to be shifted based on a time axis (or a walking cycle). If the value of the control parameter is appropriately determined, the user may not feel discomfort due to the torque output while performing the corresponding exercise mode.

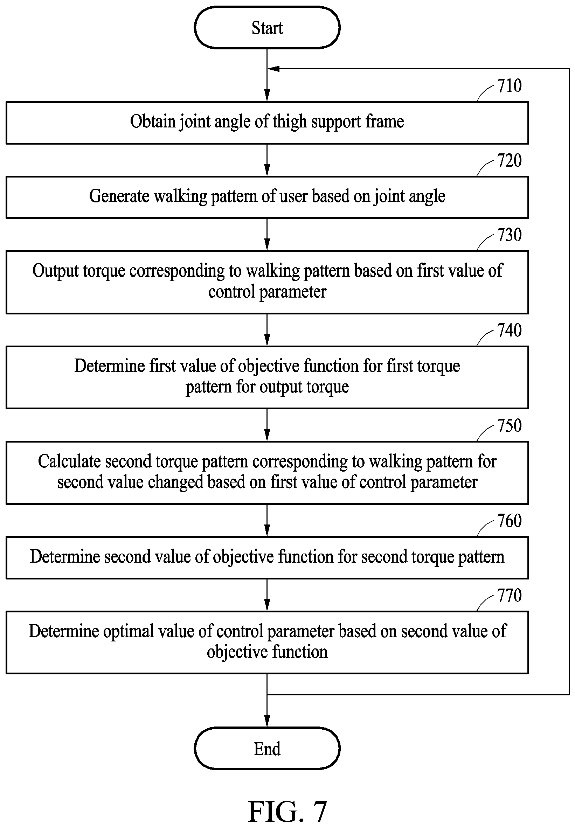

Hereinafter, a method of determining a value of a control parameter to control a wearable device will be described in detail with reference to FIGS. 7 to 15.

FIG. 2 is a block diagram of an electronic device in a network environment, according to an embodiment.

FIG. 2 is a block diagram of an electronic device 201 (e.g., the electronic device 110 of FIG. 1) in a network environment 200 according to an embodiment. Referring to FIG. 2, the electronic device 201 in a network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, a memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module (SIM) 296, or an antenna module 297. In some embodiments, at least one (e.g., the connecting terminal 278) of the above components may be omitted from the electronic device 201, or one or more other components may be added in the electronic device 201. In some embodiments, some (e.g., the sensor module 276, the camera module 280, or the antenna module 297) of the components may be integrated as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to an embodiment, as at least a portion of data processing or computation, the processor 220 may store a command or data received from another component (e.g., the sensor module 276 or the communication module 290) in a volatile memory 232, process the command or the data stored in the volatile memory 232, and store resulting data in a non-volatile memory 234. According to an embodiment, the processor 220 may include a main processor 221 (e.g., a central processing unit (CPU) or an application processor (AP)) or an auxiliary processor 223 (e.g., a graphics processing unit (GPU), a neural processing unit (NPU), an image signal processor (ISP), a sensor hub processor, or a communication processor (CP)) that is operable independently of, or in conjunction with the main processor 221. For example, when the electronic device 201 includes the main processor 221 and the auxiliary processor 223, the auxiliary processor 223 may be adapted to consume less power than the main processor 221 or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an ISP or a CP) may be implemented as a portion of another component (e.g., the camera module 280 or the communication module 290) that is functionally related to the auxiliary processor 223. According to an embodiment, the auxiliary processor 223 (e.g., an NPU) may include a hardware structure specified for artificial intelligence (AI) model processing. An artificial intelligence model may be generated by machine learning. Such learning may be performed, e.g., by the electronic device 201 where the artificial intelligence is performed, or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various pieces of data may include, for example, software (e.g., the program 240) and input data or output data for a command related thereto. The memory 230 may include the volatile memory 232 or the non-volatile memory 234.

The program 240 may be stored as software in the memory 230, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing a record. The receiver may be used for receiving incoming calls. According to an embodiment, the receiver may be implemented separately from the speaker or as a portion of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to sense a touch, or a pressure sensor adapted to measure an intensity of a force incurred by the touch.

The audio module 270 may convert a sound into an electrical signal and vice versa. According to an embodiment, the audio module 270 may obtain the sound via the input module 250 or output the sound via the sound output module 255 or an external electronic device (e.g., an electronic device 202 such as a speaker or a headphone) directly or wirelessly connected to the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high-definition multimedia interface (HDMI), a universal serial bus (USB) interface, a secure digital (SD) card interface, or an audio interface.

The connecting terminal 278 may include a connector via which the electronic device 201 may be physically connected to an external electronic device (e.g., the electronic device 202). According to an embodiment, the connecting terminal 278 may include, for example, an HDMI connector, a USB connector, an SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image and moving images. According to an embodiment, the camera module 280 may include one or more lenses, image sensors, ISPs, or flashes.

The power management module 288 may manage power supplied to the electronic device 201. According to an embodiment, the power management module 288 may be implemented as, for example, at least a portion of a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor) and support direct (e.g., wired) communication or wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module, or a power line communication (PLC) module). A corresponding one of these communication modules may communicate with the external electronic device 204 via the first network 298 (e.g., a short-range communication network, such as Bluetooth™, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 292 may identify and authenticate the electronic device 201 in a communication network, such as the first network 298 or the second network 299, using subscriber information (e.g., international mobile subscriber identity (IMSI)) stored in the SIM 296.

The wireless communication module 292 may support a 5G network after a 4G network, and a next-generation communication technology, e.g., a new radio (NR) access technology. The NR access technology may support enhanced mobile broadband (eMBB), massive machine type communications (mMTC), or ultra-reliable and lowlatency communications (URLLC). The wireless communication module 292 may support a high-frequency band (e.g., a mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element including a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in a communication network, such as the first network 298 or the second network 299, may be selected by, for example, the communication module 290 from the plurality of antennas. The signal or the power may be transmitted or received between the communication module 290 and the external electronic device via the at least one selected antenna. According to an embodiment, another component (e.g., a radio frequency integrated circuit (RFIC)) other than the radiating element may be additionally formed as a portion of the antenna module 297.

According to an embodiment, the antenna module 297 may form a mmWave antenna module. For example, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the external electronic devices 202 and 204 may be a device of a same type as, or a different type from, the electronic device 201. According to an embodiment, all or some of operations to be executed by the electronic device 201 may be executed at one or more of external electronic devices (e.g., the external electronic devices 202 and 204, or the server 208). For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra lowlatency services using, e.g., distributed computing or mobile edge computing. In another embodiment, the external electronic device 204 may include an Internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element(s).

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least portion of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

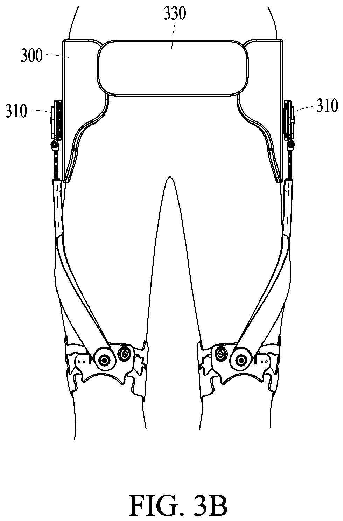

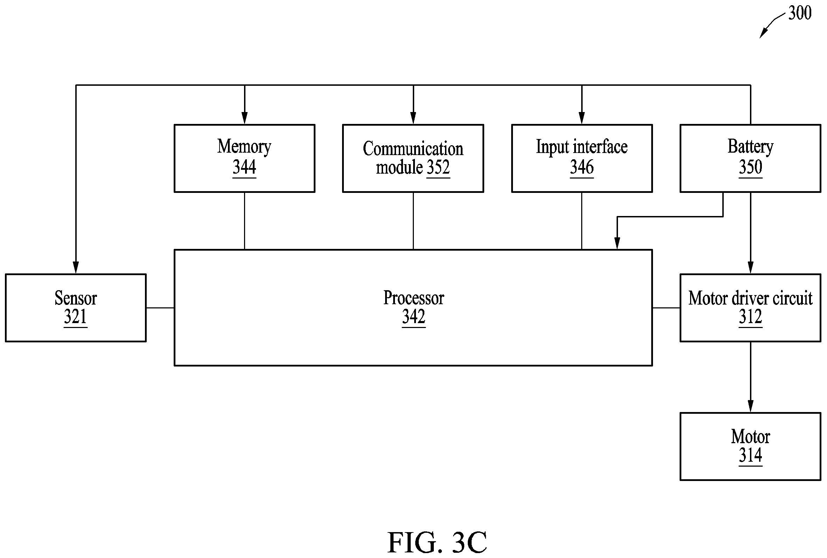

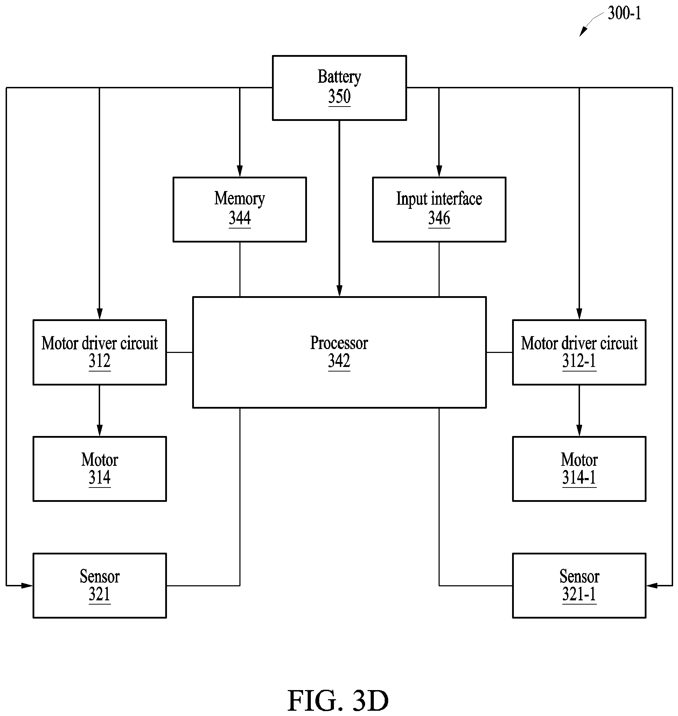

FIGS. 3a, 3b, 3c, and 3d are diagrams illustrating a wearable device, according to an embodiment.

Referring to FIGS. 3a, 3b, 3c, and 3d, a wearable device 300 (e.g., the wearable device 120 of FIG. 1) may be worn by a user to assist a gait of the user. For example, the wearable device 300 may be a device for assisting a gait of the user. Further, the wearable device 300 may be an exercise device that provides an exercise function by assisting a motion (e.g., a gait or an exercise) of the user and providing the user with a resistance force. For example, the resistance force provided to the user may be a force actively applied to the user, such as a force output by a device such as a motor. Alternatively, the resistance force may not be a force actively applied to the user, but may be a force that impedes a motion of the user, such as a frictional force. The resistance force may also be referred to as an exercise load.

Although FIGS. 3a, 3b, 3c, and 3d illustrate a hip-type wearable device 300, the type of the wearable device is not limited thereto. The wearable device may be a type that supports the entire lower limbs or a type that supports a portion of the lower limbs. In addition, the wearable device may be one of a type that supports a portion of the lower limbs, a type that supports up to the knees, a type that supports up to the ankles, and a type that supports the entire body.

The embodiments described with reference to FIGS. 3a, 3b, 3c, and 3d may apply to a hip-type wearable device, but are not limited thereto, and may all apply to various types of wearable devices.

According to an embodiment, the wearable device 300 may include a driver 310, a sensor unit 320, an inertial measurement unit (IMU) 330, a controller 340, a battery 350, and a communication module 352. For example, the IMU 330 and the controller 340 may be disposed in a main frame of the wearable device 300. For example, the IMU 330 and the controller 340 may be included in a housing that is formed in (or attached to) the outside of the main frame of the wearable device 300.

The driver 310 may include a motor 314 and a motor driver circuit 312 for driving the motor 314. The sensor unit 320 may include at least one sensor 321. The controller 340 may include a processor 342, a memory 344, and an input interface 346. Although one sensor 321, one motor driver circuit 312, and one motor 314 are shown in FIG. 3c, this is merely an example. As in another example shown in FIG. 3d, a wearable device 300-1 may include a plurality of sensors 321 and 321-1, a plurality of motor driver circuits 312 and 312-1, and a plurality of motors 314 and 314-1. Also, according to the implementation, the wearable device 300 may include a plurality of processors. The number of motor driver circuits, the number of motors, or the number of processors may vary depending on a body part on which the wearable device 300 is worn.

The following description of the sensor 321, the motor driver circuit 312, and the motor 314 may also apply to the sensor 321-1, the motor driver circuit 312-1, and the motor 314-1 illustrated in FIG. 3d.

The driver 310 may drive a hip joint of a user. For example, the driver 310 may be positioned on the right hip portion and/or the left hip portion of the user. The driver 310 may be additionally positioned on the knee portions and the ankle portions of the user. The driver 310 may include the motor 314 for generating a rotational torque and the motor driver circuit 312 for driving the motor 314.

The sensor unit 320 may measure the angles of the hip joints of the user during a gait. The angles of the hip joints may be the rotation angles of thigh support frames in response to the motion of the user or the rotation of the motor 314. Information on the angles of the hip joints sensed by the sensor unit 320 may include the angle of the right hip j oint, the angle of the left hip j oint, the difference between the angles of both hip joints, and the hip joint motion direction. For example, the sensor 321 may be positioned in the driver 310. According to the position of the sensor 321, the sensor unit 320 may additionally measure the angles of the knees and the angles of the ankles of the user. The sensor 321 may be an encoder. The information on the angles of the joints measured by the sensor unit 320 may be transmitted to the controller 340.

According to an embodiment, the sensor unit 320 may include a potentiometer. The potentiometer may sense an R-axis joint angle, an L-axis joint angle, an R-axis joint angular velocity, and an L-axis joint angular velocity according to a walking motion of the user. In this example, the R and L axes may be reference axes for the right leg and the left leg of the user, respectively. For example, the R/L axis may be set to be vertical to the ground and set such that a front side of a body of a person has a negative value and a rear side of the body has a positive value.

The IMU 330 may measure acceleration information and pose information during a gait. For example, the IMU 330 may sense X-axis, Y-axis, and Z-axis accelerations and X-axis, Y-axis, and Z-axis angular velocities according to the gait motion of the user. The acceleration information and pose information measured by the IMU 330 may be transmitted to the controller 340.

In addition to the sensor unit 320 and the IMU 330 described above, the wearable device 300 may include a sensor (e.g., an electromyogram (EMG) sensor) configured to sense a change in a quantity of motion of the user or a change in a biosignal according to a gait motion.

The controller 340 may control an overall operation of the wearable device 300. For example, the controller 340 may receive the information sensed by each of the sensor unit 320 and the IMU 330. The information sensed by the IMU 330 may include acceleration information and pose information, and the information sensed by the sensor unit 320 may include the angle of the right hip joint, the angle of the left hip joint, the difference between the angles of the two hip joints, and the hip joint motion direction. According to an example, the controller 340 may calculate the difference between the angles of both hip joints based on the angle of the right hip joint and the angle of the left hip joint. The controller 340 may generate a signal for controlling the driver 310 based on the sensed information. For example, the generated signal may be an assistance force for assisting a motion of the user. Alternatively, the generated signal may be a resistance force for impeding a motion of the user. The resistance force may be provided to the user to assist the user in doing an exercise. In the following description, a negative magnitude of an exercise load (or a torque) may indicate a resistance force, and a positive magnitude thereof may indicate an assistance force.

In an example, the processor 342 of the controller 340 may control the driver 310 to provide the user with a resistance force. For example, the driver 310 may provide the user with a resistance force by applying an active force to the user through the motor 314. Alternatively, the driver 310 may provide the user with a resistance force using the back-drivability of the motor 314, without applying an active force to the user. The back-drivability of the motor may be a responsiveness of the rotation axis of the motor to an external force. When the back-drivability of the motor increases, the motor may more readily respond to an external force acting on the rotation axis of the motor (that is, the rotation axis of the

**EP 4 454 626 A1**

motor may more readily rotate). Even when the same external force is applied to the rotation axis of the motor, the degree of rotation of the rotation axis of the motor may change according to the degree of back-drivability.

According to an embodiment, the processor 342 of the controller 340 may control the driver 310 to output a torque (or an assistance torque) for assisting a motion of the user. For example, in the hip-type wearable device 300, the driver 310 may be disposed on each of the left hip portion and the right hip portion, and the controller 340 may output a control signal for controlling the driver 310 to generate a torque.

The driver 310 may generate a torque based on the control signal output by the controller 340. A torque value for generating the torque may be externally set or be set by the controller 340. For example, to indicate a magnitude of the torque value, the controller 340 may use a magnitude of a current for the signal transmitted to the driver 310. That is, as the magnitude of the current received by the driver 310 increases, the torque value may increase. As another example, the processor 342 of the controller 340 may transmit the control signal to the motor driver circuit 312 of the driver 310, and the motor driver circuit 312 may generate a current corresponding to the control signal to control the motor 314.

The battery 350 may supply power to the components of the wearable device 300. The wearable device 300 may further include a circuit (e.g., a power management integrated circuit (PMIC)) configured to convert the power of the battery 350 according to an operating voltage of the components of the wearable device 300 and provide the same to the components of the wearable device 300. In addition, the battery 350 may or may not supply power to the motor 314 based on the operation mode of the wearable device 300.

The communication module 352 may support the establishment of a direct (or wired) communication channel or a wireless communication channel between the wearable device 300 and an external electronic device, and support the communication through the established communication channel. The communication module 352 may include one or more communication processors configured to support direct (e.g., wired) communication or wireless communication. According to an embodiment, the communication module 352 may include a wireless communication module (e.g., a cellular communication module, a short-range wireless communication module, or a global navigation satellite system (GNSS) communication module) or a wired communication module (e.g., a local area network (LAN) communication module, or a power line communication (PLC) module). A corresponding one of these communication modules may communicate with the external electronic device via a first network (e.g., a short-range communication network such as Bluetooth™, wireless-fidelity (Wi-Fi) direct, or infrared data association (IrDA)) or a second network (e.g., a legacy cellular network, a 5G network, a next-generation communication network, the Internet, or a computer network). These various types of communication modules may be implemented as a single component (e.g., a single chip), or may be implemented as multiple components (e.g., multiple chips) separate from each other.

According to an embodiment, the electronic device 201 described above with reference to FIG. 2 may be included in the wearable device 300.

According to an embodiment, the electronic device 201 described above with reference to FIG. 2 may be a separate device physically separated from the wearable device 300, and the electronic device 201 and the wearable device 300 may be connected through short-range wireless communication.

FIG. 4 is a diagram illustrating a wearable device communicating with an electronic device, according to an embodiment.

Referring to FIG. 4, the wearable device 300 (e.g., the wearable device 120 of FIG. 1) described above with reference to FIGS. 3a, 3b, 3c, and 3d may communicate with the electronic device 201 (e.g., the electronic device 110 of FIG. 1) described above with reference to FIG. 2. For example, the electronic device 201 may be an electronic device of a user of the wearable device 300. According to an embodiment, the wearable device 300 and the electronic device 201 may be connected using a short-range wireless communication method.

The electronic device 201 may display a user interface (UI) for controlling an operation of the wearable device 300 on a display 201-1. The UI may include, for example, at least one soft key through which the user may control the wearable device 300.

The user may input a command for controlling the operation of the wearable device 300 through the UI on the display 201-1 of the electronic device 201, and the electronic device 201 may generate a control instruction corresponding to the command and transmit the generated control instruction to the wearable device 300. The wearable device 300 may operate according to the received control instruction, and transmit a control result to the electronic device 201. The electronic device 201 may display a control completion message on the display 201-1 of the electronic device 201.

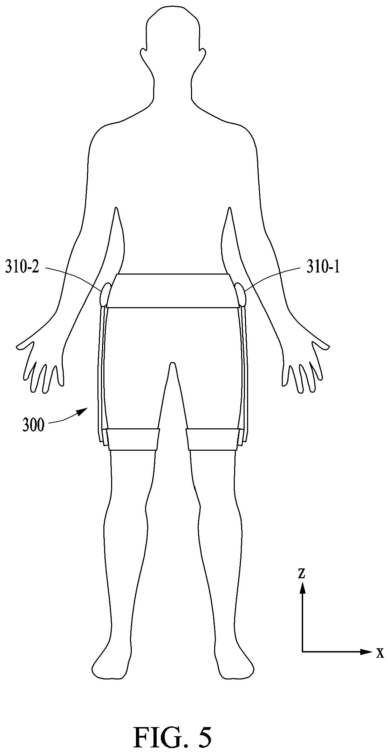

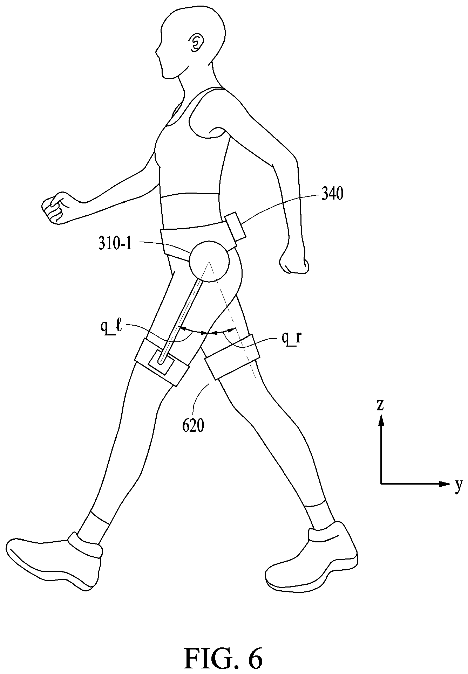

FIGS. 5 and 6 are diagrams illustrating a torque output method of a wearable device, according to an embodiment.

Referring to FIGS. 5 and 6, drivers 310-1 and 310-2 of the wearable device 300 of FIG. 3 (e.g., the wearable device 120 of FIG. 1) may be disposed near the hip joints of a user, and the controller 340 of the wearable device 300 may be disposed near the lower back of the user. The positions of the drivers 310-1 and 310-2 and the controller 340 are not limited to the example positions illustrated in FIGS. 5 and 6.

The wearable device 300 may measure (or sense) a left hip joint angle $q\_l$ and a right hip joint angle $q\_r$ of the user. For example, the wearable device 300 may measure the left hip joint angle $q\_l$ of the user through a left sensor (e.g., Hall encoder or encoder) and measure the right hip joint angle q r of the user through a right sensor (e.g., Hall sensor or encoder). As illustrated in FIG. 6, the left hip joint angle $q\_l$ may be negative because the left leg is before a reference line 620, and the right hip joint angle $q\_r$ may be positive because the right leg is behind the reference line 620. According to implementation, the right hip joint angle $q\_r$ may be negative when the right leg is before the reference line 620, and the left hip joint angle $q\_l$ may be positive when the left leg is behind the reference line 620.

According to an embodiment, the wearable device 300 may obtain a first angle (e.g., $q\_r$) and a second angle (e.g., $q\_l$) by filtering a first raw angle (e.g., $q\_r\_raw$) of a first joint (e.g., the right hip joint) and a second raw angle (e.g., $q\_l\_raw$) of a second joint (e.g., the left hip j oint) measured by the sensor unit 320. For example, the wearable device 300 may filter the first raw angle and the second raw angle based on a first previous angle and a second previous angle measured with respect to a previous time. The degree of filtering the raw angle may be adjusted based on the value of a control parameter indicating the sensitivity to an angle change.

According to an embodiment, the wearable device 300 may determine a torque value $\tau(t)$ based on the left hip joint angle $q\_l$, the right hip joint angle $q\_r$, an offset angle $c$, a sensitivity $\alpha$, a gain $\kappa$, and a delay $\Delta t$, and control the motor driver circuit 312 of the wearable device 300 to output the determined torque value $\tau(t)$. The force provided to the user by the torque value $\tau(t)$ may be referred to herein as force feedback. For example, the wearable device 300 may determine the torque value $\tau(t)$ based on Equation 1 below.

[Equation 1]

$$y = sin(q\_r) - sin(q\_l)$$

$$\tau(t) = \kappa y(t - \Delta t)$$

In Equation 1, $y$ denotes a state factor, $q\_r$ denotes the right hip joint angle, and $q\_l$ denotes the left hip joint angle. According to Equation 1, the state factor $y$ may be associated with the distance between the two legs. For example, $y$ being "0" may indicate a state (e.g., a crossing state) in which the distance between the legs is "0", and the absolute value of $y$ being maximum may indicate a state (e.g., a landing state) in which the angle between the legs is maximum. According to an embodiment, when $q\_r$ and $q\_l$ are measured at a time $t$, the state factor may be represented as $y(t)$.

The gain $\kappa$ is a parameter indicating the magnitude and direction of an output torque. As the magnitude of the gain $\kappa$ increases, a greater torque may be output. If the gain $\kappa$ is negative, a torque acting as a resistance force may be output to the user, and if the gain

$\kappa$ is positive, a torque acting as an assistance force may be output to the user. The delay $\Delta t$ is a parameter associated with a torque output timing. The value of the gain $\kappa$ and the value of the delay $\Delta t$ may be preset, and may be adjustable by a user, the wearable device 300, or the electronic device 201 described above with reference to FIG. 2.

A model for outputting a torque acting as an assistance force to a user using Equation 1 may be defined as a torque output model (or a torque output algorithm). The wearable device 300 or the electronic device 201 may determine the magnitude and delay of a torque to be output by inputting the values of input parameters received through sensors into the torque output model.

According to an embodiment, the wearable device 300 or the electronic device 201 may determine a first torque value through Equation 2 below by applying a first gain value and a first delay value to a first state factor $y(t)$, wherein the first gain value and the first delay value may be parameter values determined with respect to the state factor $y(t)$.

[Equation 2]

$$\tau_l(t) = \kappa y(t - \Delta t)$$

$$\tau_r(t) = -\kappa y(t - \Delta t)$$

The calculated first torque value may include a value for the first joint and a value for the second joint since it should be applied to the two legs. For example, $\tau l(t)$ may be a value for the left hip joint, which is the second joint, $\tau r(t)$ may be a value for the right hip joint, which is the first joint. $\tau l(t)$ and $\tau r(t)$ may be values with the same magnitude and opposite torque directions. The wearable device 300 may control the motor driver 312 of the wearable device 300 to output a torque corresponding to the first torque value.

According to an embodiment, when the user performs an asymmetrical gait with the left leg and the right leg, the wearable device 300 may provide asymmetrical torques respectively to both legs of the user to assist the asymmetric gait. For example, a stronger assistance force may be provided to a leg with a shorter stride width or a slower swing speed. Hereinafter, a leg with a small stride width or a slow swing speed will be referred to as an affected leg or a target leg.

In general, an affected leg may have a shorter swing time or a smaller stride width than an unaffected leg. According to an embodiment, a method of adjusting the timing of a torque acting on an affected leg to assist a gait of a user may be considered. For example, an offset angle may be added to an actual joint angle of an affected leg to increase an output time of a torque for assisting a swing motion of the affected leg. $c$ may be the value of a parameter indicating an offset angle between joint angles. As the offset angle is added to the actual joint angle of the affected leg, the value of an input parameter that is input into the torque output model mounted on (or applied to) the wearable device 300 may be adjusted. For example, the values of $q\_r$ and $q\_l$ may be adjusted through Equation 3 below. $c_r$ denotes an offset angle with respect to the right hip joint, and $cl$ denotes an offset angle with respect to the left hip joint.

[Equation 3]

$$q_{-r}(t) \leftarrow q_{-r}(t) + c_r$$

$$q_{-l}(t) \leftarrow q_{-l}(t) + c_l$$

According to an embodiment, the wearable device 300 may filter the state factor to reduce the discomfort the user may experience due to irregular torque outputs. For example, the wearable device 300 or the electronic device 201 may determine an initial state factor $y_{raw}(t)$ of a current time $t$ based on the first angle of the first joint and the second angle of the second joint, and determine the first state factor $y(t)$ based on a previous state factor $y^{prv}$ determined with respect to a previous time $t\text{-}1$ and the initial state factor $y_{raw}(t)$. The current time $t$ may be a time at which $t$-th data (or sample) is processed, and the previous time $t\text{-}1$ may be a time at which $t\text{-}l$-th data is processed. For example, the difference between the current time $t$ and the previous time $t\text{-}1$ may be an operation interval of a processor for generating or processing the corresponding items of data. The sensitivity $\alpha$ may be the value of a parameter indicating a sensitivity. For example, the sensitivity value may be continuously adjusted during a test gait. However, the sensitivity value may be preset to a predetermined value to reduce the computational complexity.

The embodiment described with reference to FIG. 6 is an embodiment of calculating the state factor y using the left hip joint angle $q\_l$ and the right hip joint angle $q\_r$ and calculating the torque values for the left leg and the right leg based on the state factor $y$.

As an embodiment different from the embodiment of FIG. 6, an embodiment of generating a walking pattern for the left leg and a walking pattern for the right leg based on the left hip joint angle $q\_l$ and the right hip joint angle $q\_r$, respectively, and calculating the respective torque values for the left leg and the right leg using the generated walking patterns may also be considered. The description provided below with reference to FIGS. 7 to 14 may apply to one of the two legs (e.g., the right leg), but may also apply likewise to the other leg (e.g., the left leg).

FIG. 7 is a flowchart of a method of determining a value of a control parameter to control a wearable device, according to an embodiment.

The following operations 710 to 770 may be performed by a wearable device (e.g., the wearable device 120 of FIG. 1 or the wearable device 300 of FIG. 3).

In operation 710, the wearable device may obtain a joint angle of a thigh support frame. For example, when a user walks while wearing the wearable device, the thigh support frame arranged to correspond to a hip joint of the user may rotate, and the rotation angle of the thigh support frame may be obtained as the joint angle. For example, the joint angle of the thigh support frame may be generated by a Hall sensor positioned at a portion where the thigh support frame rotates.

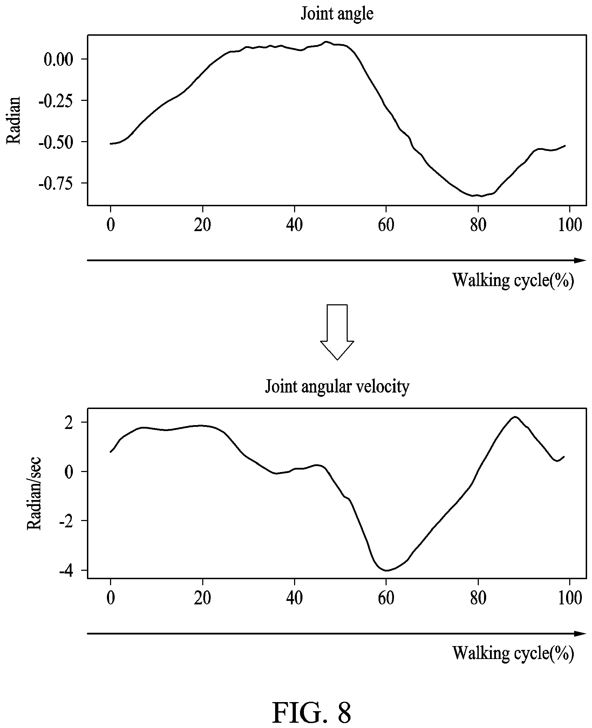

In operation 720, the wearable device may generate a walking pattern of the user based on the joint angle. Human gait may have repeated motions of two legs, and the repeated motions of the legs may represent a walking cycle. For example, a walking pattern appearing in a single walking cycle may include at least one of a joint angle pattern or a joint angular velocity pattern of a hip joint (or a thigh support frame) over time. The joint angle pattern and the joint angular velocity pattern will be described in detail below with reference to FIG. 8.

According to an embodiment, the walking pattern may include at least one of a left walking pattern for the left thigh support frame or a right walking pattern for the right thigh support frame. For example, if the user walks in balance and symmetry between the left leg and the right leg, a walking pattern for one leg may be generated, but a walking pattern for the other leg may not be generated. For example, if the user walks out of balance between the left leg and the right leg, respective walking patterns for the two legs may be generated.

According to an embodiment, the following operation 730 may be performed after the walking pattern of the user is generated. For example, the walking pattern generated through operations 710 and 720 may not be a previously stored walking pattern of the user, but may be a walking pattern generated in real time while the user is wearing the wearable device.

In operation 730, the wearable device may output a torque corresponding to the walking pattern based on a first value of a control parameter. For example, the control parameters may include at least one of a parameter for the output timing of the torque, a parameter for the magnitude of the torque, a parameter for the offset for the torque, or a combination thereof. For example, the control parameter for the magnitude of the torque (e.g., a gain) may include a swing gain applied in a swing phase and a stance gain applied in a stance phase. As in the above example, even control parameters for the same control (e.g., control of the magnitude of the torque) may be classified as different control parameters according to the timepoints applied.

According to an embodiment, the first value of the control parameter may be a default value or a most recently determined (or stored) value of the control parameter. For example, the first value of the control parameter may be a predetermined value for a walking speed corresponding to the walking pattern of the user. For example, the first value of the control parameter predetermined to correspond to the walking speed may be a value personalized to the user.

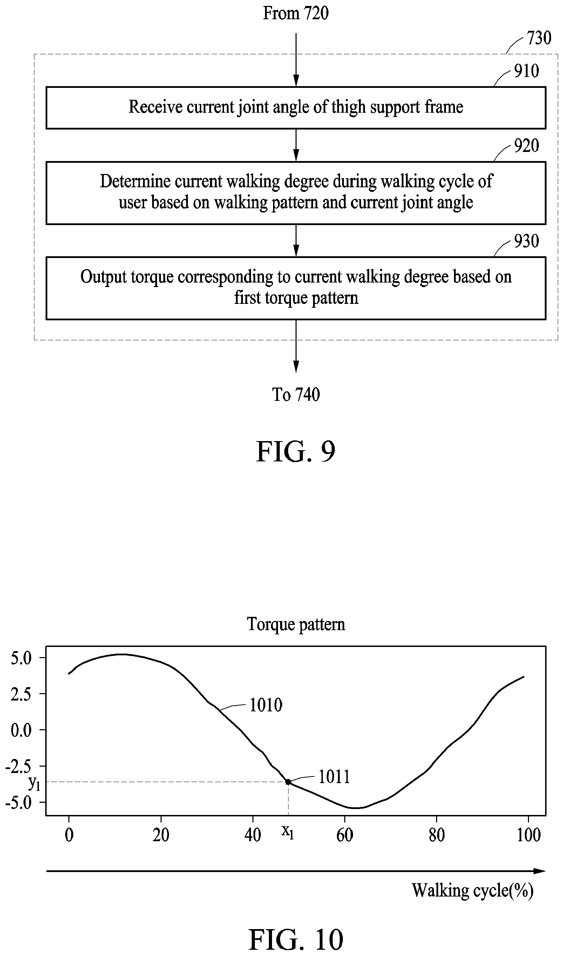

According to an embodiment, the wearable device may determine the current walking degree of the user based on the walking pattern and output a torque corresponding to the determined walking degree. Hereinafter, a method of outputting a torque corresponding to the current walking degree will be described in detail with reference to FIG. 9.

In operation 740, the wearable device may determine a first value of an objective function for a first torque pattern for the output torque. For example, the first torque pattern may be a trajectory of the values of torques output during one walking cycle.

According to an embodiment, the objective function may be a function to quantify whether a torque is appropriately output to the user.

For example, the objective function may include a first factor related to power calculated based on the joint angular velocity pattern of the walking pattern and the first torque pattern. For example, the first factor related to the power may be a factor related to a ratio of a period in which the power is negative to a period in which the power is positive. The period in which the power is positive is a period in which an assistance force is applied in the motion direction of the user. Thus, when the wearable device operates in an assistance mode, the wearable device may be determined to operate efficiently as the ratio of the period in which the power is positive increases. The period in which the power is negative is a period in which a resistance force is applied in a direction opposite to the motion direction of the user. Thus, when the wearable device operates in an exercise mode, the wearable device may be determined to operate efficiently as the ratio of the period in which the power is negative increases.

For example, the objective function may include a second factor related to a first power of the right thigh support frame and a second power of the left thigh support frame calculated based on the joint angular velocity pattern of the walking pattern and the first torque pattern. The second factor may represent the difference between the powers shown in the right leg and the left leg. Reducing the difference between the powers may increase the balance between the right leg and the left leg.

For example, the objective function may include a third factor related to a first power for a first period and a second power for a second period, during the walking cycle of the user, calculated based on the joint angular velocity pattern of the walking pattern and the first torque pattern. For example, the first period may correspond to the swing phase, and the second period may correspond to the stance phase. For example, reducing the difference between the power for the swing phase and the power for the stance phase may increase the balance of the corresponding leg.

For example, the objective function may include a fourth factor related to the value of a first peak of the first torque pattern for the first period and the value of a second peak of the first torque pattern for the second period, during the walking cycle of the user. For example, the fourth factor may be the absolute value of the difference between the value of the first peak and the value of the second peak.

For example, the objective function may include a combination of at least two of the first factor, the second factor, the third factor, and the fourth factor described above. Weights may be set for the factors included in the objective function.

In operation 750, the wearable device may calculate a second torque pattern corresponding to the walking pattern for a second value changed based on the first value of the control parameter. For example, the wearable device may determine the second value of the control parameter based on the first value of the control parameter. The wearable device may calculate the second torque pattern output based on the second value of the determined control parameter. For example, when the control parameter is a parameter for a torque output timing, a second torque pattern for a case where the value of the torque output timing changes from the first value to the second value may be calculated.

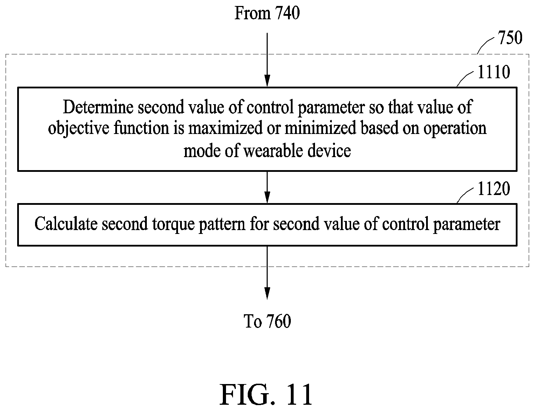

Hereinafter, a method of calculating the second torque pattern will be described in detail with reference to FIG. 11.

According to an embodiment, when the number of control parameters is N, $2^N$ second torque patterns may be calculated. For example, when the number of control parameters is N, the first value of the control parameters may be a first set value including first values of the N control parameters. The wearable device may determine a second value increased compared to the first value and a second value decreased compared to the first value for a first control parameter. According to the above embodiment, when the number of control parameters is N, $2^N$ set values may be determined, and $2^N$ second torque patterns for the $2^N$ set values may be calculated.

In operation 760, the wearable device may determine a second value of the objective function for the second torque pattern. The objective function may be the same as the objective function used to determine the first value of the objective function in operation 740.

According to an embodiment, when the number of second torque patterns is $2^N$, the number of second values of the objective function may also be $2^N$.

In operation 770, the wearable device may determine an optimal value of the control parameter based on the second value of the objective function. For example, if maximizing the value of the objective function indicates efficient control, the optimal value of the control parameter may be determined so that the calculated value of the objective function may increase compared to the previous value. For example, if minimizing the value of the objective function indicates efficient control, the optimal value of the control parameter may be determined so that the calculated value of the objective function may decrease compared to the previous value.

According to an embodiment, when the number of second values of the objective function calculated in operation 760 described above is $2^N$, a target set value of control parameters representing the maximum value (or minimum value) among the $2^N$ second values may be determined to be the optimal value of the control parameter.

According to an embodiment, operation 770 of determining the optimal value of the control parameter may be iteratively performed. For example, gradient descent may be used to determine the variation in the value of the control parameter (e.g., the difference between the first value and the second value). The variation in the value of the control parameter may be determined to be proportional to a variation in the value of the objective function to the variation in the value of the control parameter. According to the above method, the variation in the value of the control parameter may decrease as it gets closer to the larger-the-better (or smaller-the-better) value of the objective function.

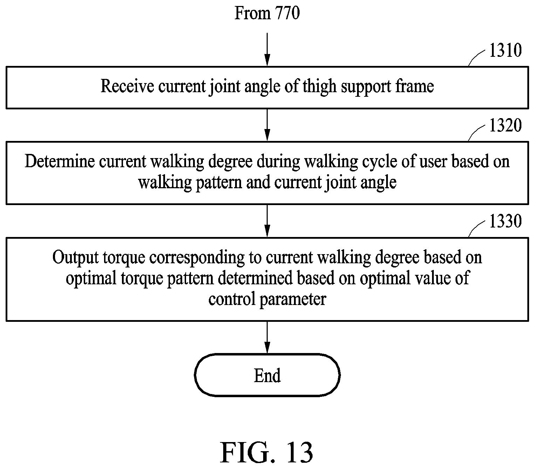

After operation 770 is performed, the wearable device may output a torque to the user using the determined optimal value of the control parameter. A method of outputting a torque to the user using the determined optimal value of the control parameter will be described in detail below with reference to FIG. 13.

According to an embodiment, the walking pattern of the user may change as the walking speed of the user changes. In this case, operations 710 to 770 described above may be iteratively performed to determine the optimal value of the control parameter appropriate for the new walking pattern.

FIG. 8 illustrates a joint angle pattern and a joint angular velocity pattern of a walking pattern, according to an example.

According to an embodiment, a wearable device (e.g., the wearable device 120 of FIG. 1 or the wearable device 300 of FIG. 3) may continuously receive the current joint angle of a thigh support frame from at least one sensor (e.g., Hall sensor or encoder) configured to measure the joint angle of a thigh support frame. The wearable device may determine the walking cycle of the user based on the received joint angles and generate a joint angle pattern 810 for the determined walking cycle as a walking pattern. For example, the walking cycle may indicate the degree of progress for a single left stride and a single right stride. The user may walk with a similar joint angle pattern 810 at a walking speed within a predetermined range, and the joint angle pattern 810 may change to a different pattern when the joint motion of the user changes as the walking speed changes.

According to an embodiment, the wearable device may generate a joint angular velocity pattern 820 as a walking pattern based on the joint angle pattern 810.

For example, the joint angular velocity pattern 820 may be a pattern for the variation in the joint angle pattern 810.

FIG. 9 is a flowchart of a method of outputting a torque corresponding to a walking pattern based on a first value of a control parameter, according to an example.

According to an embodiment, operation 730 described above with reference to FIG. 7 may include the following operations 910 to 930. Operations 910 to 930 may be performed by a wearable device (e.g., the wearable device 120 of FIG. 1 or the wearable device 300 of FIG. 3).

In operation 910, the wearable device may receive the current joint angle of the thigh support frame. For example, the current joint angle may be a joint angle obtained in real time.

In operation 920, the wearable device may determine the current walking degree during the walking cycle of the user based on the walking pattern and the current joint angle. For example, the wearable device may determine a point corresponding to the current joint angle among the values of the joint angle pattern, and determine the walking degree indicated by the point to be the current walking degree. For example, when the walking cycle is expressed as 0 to 100%, the current walking degree may be determined to be 49%.

In operation 930, the wearable device may output a torque corresponding to the current walking degree based on the first torque pattern. For example, the first torque pattern may be a basic torque pattern preset to correspond to the current walking speed of the user. For example, the first torque pattern may be a torque pattern output in a previous walking period of the user. For example, the first torque pattern may be a torque pattern changed based on the value of the control parameter determined for the current walking period based on the torque pattern output in the previous walking period.

FIG. 10 illustrates a first torque pattern, according to an example.

According to an embodiment, a first torque pattern 1010 may be generated to correspond to a walking cycle. For example, a first point 1011 in the first torque pattern 1010 may correspond to a walking degree of $x_1$ (e.g., 49%) and a torque value of $y_1$ during the walking cycle. In other words, when the walking degree of the user is determined to be $x_1$, the value of the torque output to the user may be yi.

According to an embodiment, the first torque pattern 1010 may be a basic torque pattern preset to correspond to the current walking speed of the user.

According to an embodiment, the first torque pattern 1010 may be a torque pattern output during the previous walking period of the user.

According to an embodiment, the first torque pattern 1010 may be a torque pattern changed based on the value of the control parameter determined for the current walking period based on the torque pattern output in the previous walking period.

According to an embodiment, the first torque pattern 1010 may have the form of a sine function or a cosine function. For example, the walking cycle of the user may be divided into a plurality of periods, and a different gain may be applied to each period. For example, the walking cycle may be divided into a swing phase and a stance phase, and in the swing phase, a gain of $\kappa_1$ may be applied, and a gain of $\kappa_2$ may be applied. According to an embodiment, a constraint for $\kappa_1$ and $\kappa_2$ may be preset. For example, the constraint may be that the sum of $\kappa_1$ and $\kappa_2$ satisfies a preset value (e.g., 2). For example, the constraint may be that the sum of $\kappa_1$ and $\kappa_2$ is less than or equal to the preset value (e.g., 2). $\kappa_1$ and $\kappa_2$ may each be a control parameter.

FIG. 11 is a flowchart of a method of calculating a second torque pattern corresponding to a walking pattern for a second value changed based on a first value of a control parameter, according to an example.

According to an embodiment, operation 750 described above with reference to FIG. 7 may include the following operations 1110 and 1120. Operations 1110 and 1120 may be performed by a wearable device (e.g., the wearable device 120 of FIG. 1 or the wearable device 300 of FIG. 3).

In operation 1110, the wearable device may determine the second value of the control parameter so that the value of the objective function is maximized or minimized based on an operation mode of the wearable device. For example, the operation mode of the wearable device may be an assistance mode or an exercise mode. In the assistance mode, a torque may be provided in a direction the same as the direction of the motion of the user. In the exercise mode, a torque may be provided in a direction opposite to the direction of the motion of the user.

According to an embodiment, when the operation mode is the assistance mode, the wearable device may determine the second value of the control parameter so that the first factor related to the power described above with reference to FIG. 7 among the factors of the objective function is maximized. For example, one of the values within a range preset based on the first value of the control parameter may be determined to be the second value of the control parameter. The above range may be preset to prevent a radical change in the torque value.

According to an embodiment, when the operation mode is the exercise mode, the wearable device may determine the second value of the control parameter so that the first factor related to the power described above with reference to FIG. 7 among the factors of the objective function is minimized.

According to an embodiment, when a plurality of control parameters are present, a second set value of the control parameters may be determined. The second value determined for each of the control parameters may be one of the two cases, increased or decreased compared to the first value. Considering the above cases, if the number of control parameters is N, $2^N$ second set values may be determined.

In operation 1120, the wearable device may calculate the second torque pattern for the second value of the control parameter. As the value of the control parameter changes from the first value to the second value, the torque pattern may also change.

According to an embodiment, $2^N$ second torque patterns for the second set values of the $2^N$ control parameters may be calculated.

According to an embodiment, after operation 1120 is performed, operation 760 described above with reference to FIG. 7 may be performed. For example, if the number of calculated second torque patterns is $2^N$, the number of determined second values of the objective function may also be $2^N$.

According to an embodiment, in operation 770 described above with reference to FIG. 7, the wearable device may determine the maximum value or minimum value among $2^N$ second values based on the operation mode. The wearable device may determine a target set value of the control parameters representing the determined maximum value or minimum value to be the optimal value of the control parameter.

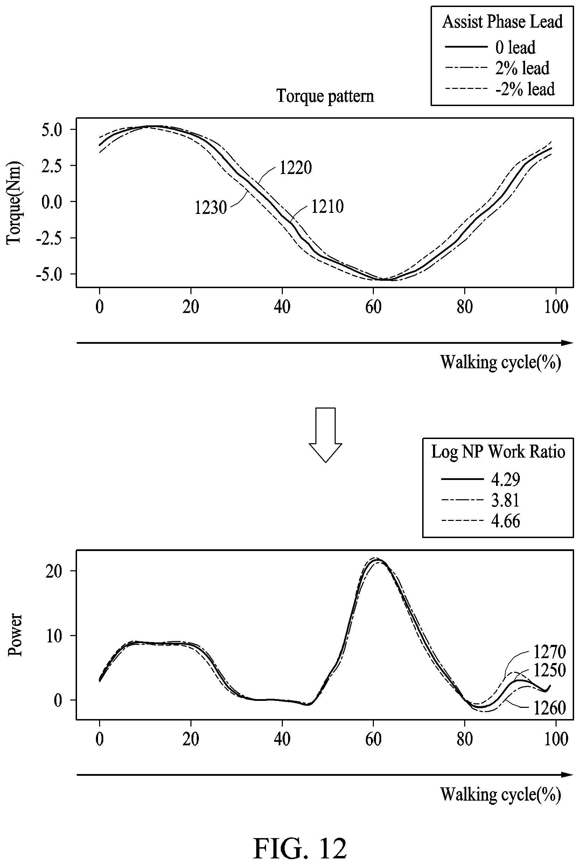

FIG. 12 illustrates torque patterns and powers calculated based on the torque patterns according to an example.

According to an embodiment, second torque patterns 1220 and 1230 may be generated based on a first torque pattern 1210 by changing the value of a control parameter. For example, the control parameter may be a parameter related to the output timing of a torque. The parameter related to the output timing of the torque may be named a phase lead parameter. The phase lead parameter may be adjusted in the unit of % based on a walking cycle.

The wearable device may generate the second torque pattern 1220 that advances the torque output timing compared to the first torque pattern 1210 by adjusting the parameter related to the output timing of the torque. For example, the second torque pattern 1220 may be 2% earlier than the first torque pattern 1210 based on the walking cycle.

The wearable device may generate the second torque pattern 1230 that postpones the torque output timing compared to the first torque pattern 1210 by adjusting the parameter related to the output timing of the torque. For example, the second torque pattern 1230 may be 2% later than the first torque pattern 1210 based on the walking cycle.

According to an embodiment, the wearable device may calculate the powers for the second torque patterns 1220 and 1230 as factors (e.g., the first factor described above with reference to FIG. 7) of an objective function. For example, the calculated powers may be expressed as the value of log for a negative-to-positive work ratio. Power patterns 1260 and 1270 for the powers calculated for the second torque patterns 1220 and 1230 are shown. For example, the power pattern 1260 may be the power calculated for the second torque pattern 1220, and the value of the log NP work ratio may be calculated at 3.81. For example, the power pattern 1270 may be the power calculated for the second torque pattern 1230, and the value of the log NP work ratio may be calculated at 4.29. For example, a power pattern 1250 may be the power calculated for the first torque pattern 1210, and the value of the log NP work ratio may be calculated at 4.29. If increasing the value of the calculated power corresponds to increasing the value of the objective function, it may be determined that changing the torque pattern to the second torque pattern 1230 is more appropriate than to the second torque pattern 1220.

FIG. 13 is a flowchart of a method of outputting a torque based on an optimal torque pattern determined based on an optimal value of a control parameter according to an example.

According to an embodiment, the following operations 1310 to 1330 may be further performed after operation 770 described above with reference to FIG. 7 is performed. Operations 1310 to 1330 may be performed by a wearable device (e.g., the wearable device 120 of FIG. 1 or the wearable device 300 of FIG. 3).

In operation 1310, the wearable device may receive the current joint angle of the thigh support frame.

In operation 1320, the wearable device may determine the current walking degree during the walking cycle of the user based on the walking pattern and the current joint angle.

In operation 1330, the wearable device may output a torque corresponding to the current walking degree based on an optimal torque pattern determined based on the optimal value of the control parameter. For example, the optimal value of the control parameter may be the second value of the control parameter described above. For example, the optimal torque pattern may be a torque pattern generated based on the second value of the control parameter.

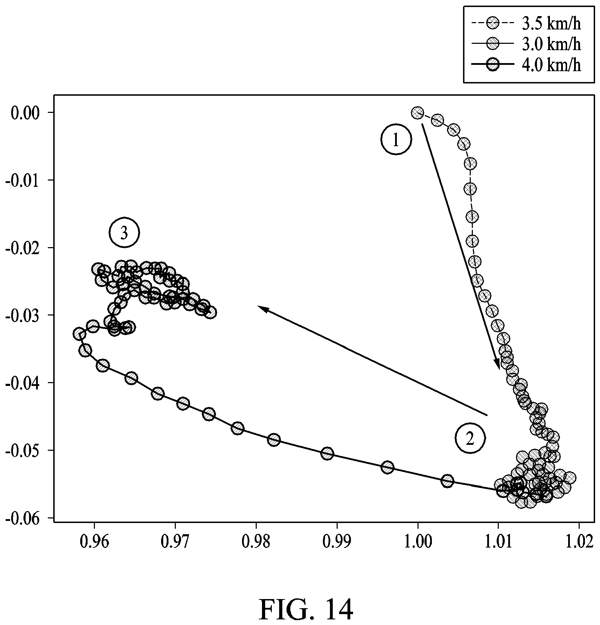

FIG. 14 illustrates values of control parameters that change according to a walking speed of a user, according to an example.

According to an embodiment, a control parameter may include a parameter for a stance gain and a phase lead parameter. For example, the value of the stance gain may be determined based on the value of a swing gain. For example, the value of the stance gain and the value of the swing gain may be a preset value (e.g., 2).

A user wearing a wearable device (e.g., the wearable device 120 of FIG. 1 or the wearable device 300 of FIG. 3) may start walking at a speed of 3.5 km/h (Phase 1). During the first phase of walking, the wearable device may perform optimization while changing the value of the control parameter. According to the results shown, in the first phase, the value of the stance gain changes in an increasing direction, and the phase lead parameter changes in a decreasing direction.

The user wearing the wearable device may change the walking speed from 3.5 km/h to 3.0 km/h (Phase 2). According to the results shown, the value of the stance gain and the value of the phase lead parameter do not change significantly in the second phase.

The user wearing the wearable device may change the walking speed from 3.0 km/h to 4.0 km/h (Phase 3). According to the results shown, in the third phase, the value of the stance gain changes in a decreasing direction, and the phase lead parameter changes in an increasing direction.

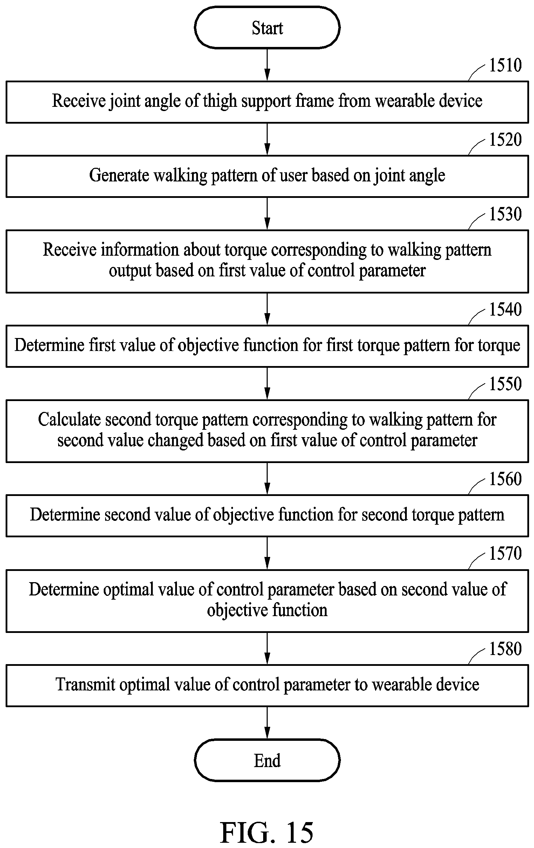

FIG. 15 is a flowchart of a method of determining a value of a control parameter to control a wearable device, performed by an electronic device, according to an embodiment.

The following operations 1510 to 1580 may be performed by an electronic device (e.g., the electronic device 110 of FIG. 1 or the electronic device 201 of FIG. 2) connected with a wearable device (e.g., the wearable device 120 of FIG. 1 or the wearable device 300 of FIG. 3).

In operation 1510, the electronic device may receive a joint angle of a thigh support frame from the wearable device. For example, the electronic device may receive the joint angle through a wireless communication channel with the wearable device.

In operation 1520, the electronic device may generate a walking pattern of a user based on the joint angle. The detailed description of operation 1520 may be replaced with the description of operation 720 described above with reference to FIG. 7.

In operation 1530, the electronic device may receive information about a torque corresponding to the walking pattern output based on a first value of a control parameter. For example, the wearable device may output a torque through operation 730 described above with reference to FIG. 7, and then transmit information about the output torque to the electronic device.

In operation 1540, the electronic device may determine a first value of an objective function for the first torque pattern for the torque. The detailed description of operation 1540 may be replaced with the description of operation 740 described above with reference to FIG. 7.

In operation 1550, the electronic device may calculate a second torque pattern corresponding to the walking pattern for a second value changed based on the first value of the control parameter. The detailed description of operation 1550 may be replaced with the description of operation 750 described above with reference to FIG. 7.

In operation 1560, the electronic device may determine a second value of the objective function for the second torque pattern. The detailed description of operation 1560 may be replaced with the description of operation 760 described above with reference to FIG. 7.

In operation 1570, the electronic device may determine an optimal value of the control parameter based on the second value of the objective function. The detailed description of operation 1570 may be replaced with the description of operation 770 described above with reference to FIG. 7.

In operation 1580, the electronic device may transmit the optimal value of the control parameter to the wearable device.

For example, the wearable device may output a torque based on the optimal value of the control parameter received from the electronic device.

According to an embodiment, a wearable device 120; 300 may include a processor 342 configured to control a wearable device. According to an embodiment, the wearable device 120; 300 may include at least one sensor 321 configured to measure a joint angle of a thigh support frame. According to an embodiment, the wearable device 120; 300 may include a motor driver circuit 312 controlled by the processor. According to an embodiment, the wearable device 120; 300 may include a motor 314 electrically connected to the motor driver circuit. According to an embodiment, the wearable device 120; 300 may include the thigh support frame configured to transmit a torque generated by the motor to at least a portion of a lower limb of a user. According to an embodiment, the processor may perform operation 720 of generating a walking pattern of the user wearing the wearable device based on the joint angle. According to an embodiment, the processor may perform operation 730 of outputting a torque corresponding to the walking pattern based on a first value of a control parameter. According to an embodiment, the processor may perform operation 740 of determining a first value of an objective function for a first torque pattern for the output torque. According to an embodiment, the processor may perform operation 750 of calculating a second torque pattern corresponding to the walking pattern for a second value changed based on the first value of the control parameter. According to an embodiment, the processor may perform operation 760 of determining a second value of the objective function for the second torque pattern. According to an embodiment, the processor may perform operation 770 of determining an optimal value of the control parameter based on the second value of the objective function.

According to an embodiment, the walking pattern may include at least one of a joint angle pattern and a joint angular velocity pattern corresponding to a walking cycle of the user.

According to an embodiment, the walking pattern may include at least one of a left walking pattern for a left thigh support frame or a right walking pattern for a right thigh support frame.

According to an embodiment, the control parameter may be a parameter for an output timing of the torque. According to an embodiment, the control parameter may be a parameter for a magnitude of the torque. According to an embodiment, the control parameter may be a parameter for an offset for the torque.

According to an embodiment, operation 730 may include operation 910 of receiving a current joint angle of the thigh support frame. According to an embodiment, operation 730 may include operation 920 of determining 920 a current walking degree during a walking cycle of the user based on the walking pattern and the current joint angle. According to an embodiment, operation 730 may include operation 930 of outputting a torque corresponding to the current walking degree based on the first torque pattern.

According to an embodiment, the objective function may include a factor related to a power calculated based on the joint angular velocity pattern of the walking pattern and the first torque pattern. According to an embodiment, the factor related to the power may be a factor related to a ratio of a period in which the power is negative to a period in which the power is positive.

According to an embodiment, the objective function may include a factor related to a first power of a right thigh support frame and a second power of a left thigh support frame calculated based on the joint angular velocity pattern of the walking pattern and the first torque pattern.

According to an embodiment, the objective function may include a factor related to a first power for a first period and a second power for a second period, during a walking cycle of the user, calculated based on the joint angular velocity pattern of the walking pattern and the first torque pattern.

According to an embodiment, the objective function may include a factor related to a value of a first peak of the first torque pattern for a first period and a value of a second peak of the first torque pattern for a second period, during a walking cycle of the user.

According to an embodiment, operation 750 may include operation 1110 of determining the second value of the control parameter so that the value of the objective function is maximized or minimized based on an operation mode of the wearable device. According to an embodiment, operation 750 may include operation 1120 of calculating the second torque pattern for the second value of the control parameter. According to an embodiment, the operation mode may be any one of an assistance mode to assist a motion of the user or an exercise mode to impede a motion of the user.

According to an embodiment, a method of determining a value of a control parameter, performed by a wearable device 120; 300, may include operation 720 of generating a walking pattern of a user wearing the wearable device based on a joint angle of a thigh support frame of the wearable device. According to an embodiment, the method may include operation 730 of outputting a torque corresponding to the walking pattern based on a first value of a control parameter. According to an embodiment, the method may include operation 740 of determining a first value of an objective function for a first torque pattern for the output torque. According to an embodiment, the method may include operation 750 of calculating a second torque pattern corresponding to the walking pattern for a second value changed based on the first value of the control parameter. According to an embodiment, the method may include operation 760 of determining a second value of the objective function for the second torque pattern. According to an embodiment, the method may include operation 770 of determining an optimal value of the control parameter based on the second value of the objective function.

According to an embodiment, the method of determining a value of a control parameter may include operation 1310 of receiving a current joint angle of the thigh support frame. According to an embodiment, the method may include operation 1320 of determining a current walking degree during a walking cycle of the user based on the walking pattern and a current joint angle. According to an embodiment, the method may include operation 1330 of outputting a torque corresponding to the current walking degree based on an optimal torque pattern determined based on the optimal value of the control parameter.

According to an embodiment, the control parameter may be a parameter for an output timing of the torque. According to an embodiment, the control parameter may be a parameter for a magnitude of the torque. According to an embodiment, the control parameter may be a parameter for an offset for the torque.

According to an embodiment, operation 730 may include operation 910 of receiving a current joint angle of the thigh support frame. According to an embodiment, operation 730 may include operation 920 of determining a current walking degree during a walking cycle of the user based on the walking pattern and the current joint angle. According to an embodiment, operation 730 may include operation 930 of outputting a torque corresponding to the current walking degree based on the first torque pattern.

According to an embodiment, the objective function may include a factor related to a power calculated based on the joint angular velocity pattern of the walking pattern and the first torque pattern.

According to an embodiment, the objective function may include a factor related to a first power of a right thigh support frame and a second power of a left thigh support frame calculated based on the joint angular velocity pattern of the walking pattern and the first torque pattern.

According to an embodiment, the objective function may include a factor related to a first power for a first period and a second power for a second period, during a walking cycle of the user, calculated based on the joint angular velocity pattern of the walking pattern and the first torque pattern.

According to an embodiment, an electronic device 110; 201 may include a communication module 290 configured to exchange data with an external device. According to an embodiment, the electronic device 110; 201 may include at least one processor 220 configured to control the electronic device. According to an embodiment, the processor may perform operation 1510 of receiving a joint angle of a thigh support frame from a wearable device connected to the electronic device. According to an embodiment, the processor may perform operation 1520 of generating a walking pattern of a user wearing the wearable device based on the joint angle. According to an embodiment, the processor may perform operation 1530 of receiving information about a torque corresponding to the walking pattern output based on a first value of a control parameter. According to an embodiment, the processor may perform operation 1540 of determining a first value of an objective function for a first torque pattern for the torque. According to an embodiment, the processor may perform operation 1550 of calculating a second torque pattern corresponding to the walking pattern for a second value changed based on the first value of the control parameter. According to an embodiment, the processor may perform operation 1560 of determining a second value of the objective function for the second torque pattern. According to an embodiment, the processor may perform operation 1570 of determining an optimal value of the control parameter based on the second value of the objective function. According to an embodiment, the processor may perform operation 1580 of transmitting the optimal value of the control parameter to the wearable device.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higherlevel code that may be executed by the computer using an interpreter.

The above-described devices may be configured to act as one or more software modules in order to perform the operations of the above-described examples, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

**Claims**

1. A wearable device comprising:

   A processor configured to control the wearable device;
   at least one sensor configured to measure a joint angle of a thigh support frame;
   a motor driver circuit controlled by the processor;
   a motor electrically connected to the motor driver circuit; and
   the thigh support frame configured to transmit a torque generated by the motor to at least a portion of a lower limb of a user, wherein

the processor is configured to perform:

   generating a walking pattern of the user wearing the wearable device based on the joint angle;
   outputting a torque corresponding to the walking pattern based on a first value of a control parameter;
   determining a first value of an objective function for a first torque pattern for the output torque;
   calculating a second torque pattern corresponding to the walking pattern for a second value changed based on the first value of the control parameter;
   determining a second value of the objective function for the second torque pattern; and
   determining an optimal value of the control parameter based on the second value of the objective function.

2. The wearable device of claim 1, wherein the walking pattern comprises at least one of a joint angle pattern and a joint angular velocity pattern corresponding to a walking cycle of the user.

3. The wearable device of claim 1, wherein the walking pattern comprises at least one of a left walking pattern for a left thigh support frame or a right walking pattern for a right thigh support frame.

4. The wearable device of claim 1, wherein the control parameter is any one of a parameter for an output timing of the torque, a parameter for a magnitude of the torque, or a parameter for an offset for the torque.

5. The wearable device of claim 1, wherein the outputting of the torque corresponding to the walking pattern based on the first value of the control parameter comprises:

   receiving a current joint angle of the thigh support frame;
   determining a current walking degree during a walking cycle of the user based on the walking pattern and the current joint angle; and
   outputting a torque corresponding to the current walking degree based on the first torque pattern.

6. The wearable device of claim 1, wherein the objective function comprises a factor related to a power calculated based on the joint angular velocity pattern of the walking pattern and the first torque pattern.

7. The wearable device of claim 6, wherein the factor related to the power is a factor related to a ratio of a period in which the power is negative to a period in which the power is positive.

8. The wearable device of claim 1, wherein the objective function comprises a factor related to a first power of a right thigh support frame and a second power of a left thigh support frame calculated based on the joint angular velocity pattern of the walking pattern and the first torque pattern.

9. The wearable device of claim 1, wherein the objective function comprises a factor related to a first power for a first period and a second power for a second period, during a walking cycle of the user, calculated based on the joint angular velocity pattern of the walking pattern and the first torque pattern.

10. The wearable device of claim 1, wherein the objective function comprises a factor related to a value of a first peak of the first torque pattern for a first period and a value of a second peak of the first torque pattern for a second period, during a walking cycle of the user.

11. The wearable device of claim 1, wherein the calculating of the second torque pattern corresponding to the walking pattern for the second value changed based on the first value of the control parameter comprises:

determining the second value of the control parameter so that the value of the objective function is maximized or minimized based on an operation mode of the wearable device; and calculating the second torque pattern for the second value of the control parameter.

12. The wearable device of claim 11, wherein the operation mode is any one of an assistance mode to assist a motion of the user or an exercise mode to impede a motion of the user.

13. A method of determining a value of a control parameter, performed by a wearable device, the method comprising:

generating a walking pattern of a user wearing the wearable device based on a joint angle of a thigh support frame of the wearable device; outputting a torque corresponding to the walking pattern based on a first value of a control parameter; determining a first value of an objective function for a first torque pattern for the output torque; calculating a second torque pattern corresponding to the walking pattern for a second value changed based on the first value of the control parameter; determining a second value of the objective function for the second torque pattern; and determining an optimal value of the control parameter based on the second value of the objective function.

14. The method of claim 13, further comprising:

receiving a current joint angle of the thigh support frame; determining a current walking degree during a walking cycle of the user based on the walking pattern and a current joint angle; and outputting a torque corresponding to the current walking degree based on an optimal torque pattern determined based on the optimal value of the control parameter.

15. The method of claim 13, wherein the outputting of the torque corresponding to the walking pattern based on the first value of the control parameter comprises:

receiving a current joint angle of the thigh support frame; determining a current walking degree during a walking cycle of the user based on the walking pattern and the current joint angle; and outputting a torque corresponding to the current walking degree based on the first torque pattern.

FIG. 1

FIG. 2

FIG. 3A

FIG. 3B

FIG. 3C

300-1

Battery
350

Memory
344

Input interface
346

Motor driver circuit
312

Processor
342

Motor driver circuit
312-1

Motor
314

Motor
314-1

Sensor
321

Sensor
321-1

FIG. 3D

FIG. 4

310-2

310-1

300

z

x

FIG. 5

**FIG. 6**

```
               ┌──────────┐
               │  Start   │
               └──────────┘
                     │
                     ▼                          ┌─ 710
┌────────────────────────────────────────────────┐
│       Obtain joint angle of thigh support frame │
└────────────────────────────────────────────────┘
                     │                          ┌─ 720
┌────────────────────────────────────────────────┐
│    Generate walking pattern of user based on joint angle │
└────────────────────────────────────────────────┘
                     │                          ┌─ 730
┌────────────────────────────────────────────────┐
│ Output torque corresponding to walking pattern based on first value of │
│                  control parameter              │
└────────────────────────────────────────────────┘
                     │                          ┌─ 740
┌────────────────────────────────────────────────┐
│   Determine first value of objective function for first torque │
│              pattern for output torque          │
└────────────────────────────────────────────────┘
                     │                          ┌─ 750
┌────────────────────────────────────────────────┐
│ Calculate second torque pattern corresponding to walking pattern for │
│  second value changed based on first value of control parameter │
└────────────────────────────────────────────────┘
                     │                          ┌─ 760
┌────────────────────────────────────────────────┐
│ Determine second value of objective function for second torque pattern │
└────────────────────────────────────────────────┘
                     │                          ┌─ 770
┌────────────────────────────────────────────────┐
│ Determine optimal value of control parameter based on second value of │
│                  objective function             │
└────────────────────────────────────────────────┘
                     │
                     ▼
               ┌──────────┐
               │   End    │
               └──────────┘
```

## FIG. 7

Joint angle

Joint angular velocity

FIG. 8

From 720

730

910

Receive current joint angle of thigh support frame

920

Determine current walking degree during walking cycle of user based on walking pattern and current joint angle

930

Output torque corresponding to current walking degree based on first torque pattern

To 740

FIG. 9

Torque pattern

1010

1011

$x_1$

$y_1$

Walking cycle(%)

FIG. 10

From 740

750

1110

Determine second value of control parameter so that value of objective function is maximized or minimized based on operation mode of wearable device

1120

Calculate second torque pattern for second value of control parameter

To 760

FIG. 11

FIG. 12

From 770

/ 1310

| Receive current joint angle of thigh support frame |
|---|

/ 1320

| Determine current walking degree during walking cycle of user based on walking pattern and current joint angle |
|---|

/ 1330

| Output torque corresponding to current walking degree based on optimal torque pattern determined based on optimal value of control parameter |
|---|

End

# FIG. 13

FIG. 14

Start

Receive joint angle of thigh support frame from wearable device — 1510

Generate walking pattern of user based on joint angle — 1520

Receive information about torque corresponding to walking pattern output based on first value of control parameter — 1530

Determine first value of objective function for first torque pattern for torque — 1540

Calculate second torque pattern corresponding to walking pattern for second value changed based on first value of control parameter — 1550

Determine second value of objective function for second torque pattern — 1560

Determine optimal value of control parameter based on second value of objective function — 1570

Transmit optimal value of control parameter to wearable device — 1580

End

FIG. 15

<table>
<tr><td colspan="2" align="center">**INTERNATIONAL SEARCH REPORT**</td><td>International application No.<br><br>**PCT/KR2023/001381**</td></tr>
</table>

| A. | CLASSIFICATION OF SUBJECT MATTER |
|---|---|
| | **A61H 1/02**(2006.01)i; **B25J 9/00**(2006.01)i; **B25J 9/16**(2006.01)i; **A61H 37/00**(2006.01)i |

According to International Patent Classification (IPC) or to both national classification and IPC

| B. | FIELDS SEARCHED |
|---|---|

Minimum documentation searched (classification system followed by classification symbols)

A61H 1/02(2006.01); A61B 5/103(2006.01); A61F 2/62(2006.01); A61F 2/70(2006.01); A61F 5/052(2006.01); A61H 3/00(2006.01); B25J 13/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 보행 보조 장치(walking assistance apparatus), 관절 각도(joint angle), 허벅지 (thigh), 토크(torque), 패턴(pattern), 목적 함수(objective function), 게인(gain)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2016-0062933 A (SAMSUNG ELECTRONICS CO., LTD.) 03 June 2016 (2016-06-03)<br>See paragraphs [0037]-[0072], [0085]-[0098] and [0115]-[0119]; claim 10; and figures 1-2. | 1-5,11,13-15 |
| A | | 6-10,12 |
| Y | KR 10-2018-0137543 A (SPACE BIO-LABORATORIES CO., LTD.) 27 December 2018 (2018-12-27)<br>See paragraphs [0037]-[0038] and [0054]; and figure 1. | 1-5,11,13-15 |
| A | KR 10-2017-0011568 A (SAMSUNG ELECTRONICS CO., LTD.) 02 February 2017 (2017-02-02)<br>See paragraphs [0033]-[0140]; and figures 1-17. | 1-15 |
| A | US 8419804 B2 (HERR, Hugh Miller et al.) 16 April 2013 (2013-04-16)<br>See columns 24-60; and figures 2-25B. | 1-15 |

☑ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 April 2023** | **28 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/001381** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-1317354 B1 (SOGANG UNIVERSITY RESEARCH & BUSINESS DEVELOPMENT FOUNDATION) 11 October 2013 (2013-10-11)<br>See paragraphs [0015]-[0044]; and figures 1-5. | 1-15 |

Form PCT/ISA/210 (second sheet) (July 2022)

## INTERNATIONAL SEARCH REPORT
### Information on patent family members

| International application No. |
|---|
| **PCT/KR2023/001381** |

| Patent document cited in search report | | | Publication date (day/month/year) | Patent family member(s) | | | Publication date (day/month/year) |
|---|---|---|---|---|---|---|---|
| KR | 10-2016-0062933 | A | 03 June 2016 | CN | 105616112 | A | 01 June 2016 |
| | | | | CN | 105616112 | B | 25 June 2019 |
| | | | | EP | 3025692 | A1 | 01 June 2016 |
| | | | | EP | 3025692 | B1 | 18 July 2018 |
| | | | | JP | 2016-097300 | A | 30 May 2016 |
| | | | | JP | 2020-037021 | A | 12 March 2020 |
| | | | | JP | 2022-009914 | A | 14 January 2022 |
| | | | | JP | 6683452 | B2 | 22 April 2020 |
| | | | | JP | 6972088 | B2 | 24 November 2021 |
| | | | | KR | 10-2161310 | B1 | 29 September 2020 |
| | | | | KR | 10-2228475 | B1 | 16 March 2021 |
| | | | | KR | 10-2322002 | B1 | 04 November 2021 |
| | | | | US | 10786416 | B2 | 29 September 2020 |
| | | | | US | 2016-0143800 | A1 | 26 May 2016 |
| | | | | US | 2020-0390637 | A1 | 17 December 2020 |
| KR | 10-2018-0137543 | A | 27 December 2018 | CN | 109195565 | A | 11 January 2019 |
| | | | | CN | 109195565 | B | 23 March 2021 |
| | | | | EP | 3466394 | A1 | 10 April 2019 |
| | | | | EP | 3466394 | A4 | 01 January 2020 |
| | | | | EP | 3466394 | B1 | 24 March 2021 |
| | | | | JP | 2017-217039 | A | 14 December 2017 |
| | | | | JP | 6501727 | B2 | 17 April 2019 |
| | | | | KR | 10-2043449 | B1 | 11 November 2019 |
| | | | | US | 11219544 | B2 | 11 January 2022 |
| | | | | US | 2019-0314185 | A1 | 17 October 2019 |
| | | | | WO | 2017-208480 | A1 | 07 December 2017 |
| KR | 10-2017-0011568 | A | 02 February 2017 | CN | 106361544 | A | 01 February 2017 |
| | | | | CN | 106361544 | B | 01 January 2021 |
| | | | | CN | 112603775 | A | 06 April 2021 |
| | | | | EP | 3120823 | A1 | 25 January 2017 |
| | | | | EP | 3120823 | B1 | 25 December 2019 |
| | | | | JP | 2017-023693 | A | 02 February 2017 |
| | | | | JP | 2022-028916 | A | 16 February 2022 |
| | | | | JP | 7053135 | B2 | 12 April 2022 |
| | | | | JP | 7232310 | B2 | 02 March 2023 |
| | | | | US | 10945908 | B2 | 16 March 2021 |
| | | | | US | 2017-0020765 | A1 | 26 January 2017 |
| | | | | US | 2021-0100715 | A1 | 08 April 2021 |
| US | 8419804 | B2 | 16 April 2013 | CN | 102202613 | A | 28 September 2011 |
| | | | | EP | 2349120 | A2 | 03 August 2011 |
| | | | | EP | 2349120 | B1 | 22 March 2017 |
| | | | | EP | 3219295 | A1 | 20 September 2017 |
| | | | | JP | 2012-501739 | A | 26 January 2012 |
| | | | | KR | 10-2011-0074520 | A | 30 June 2011 |
| | | | | US | 10105244 | B2 | 23 October 2018 |
| | | | | US | 10213323 | B2 | 26 February 2019 |
| | | | | US | 10575971 | B2 | 03 March 2020 |
| | | | | US | 11529247 | B2 | 20 December 2022 |
| | | | | US | 2010-0113980 | A1 | 06 May 2010 |
| | | | | US | 2010-0174384 | A1 | 08 July 2010 |

Form PCT/ISA/210 (patent family annex) (July 2022)

## INTERNATIONAL SEARCH REPORT
### Information on patent family members

International application No.

**PCT/KR2023/001381**

| Patent document cited in search report | Publication date (day/month/year) | Patent family member(s) | | | Publication date (day/month/year) |
|---|---|---|---|---|---|
| | | US | 2010-0174385 | A1 | 08 July 2010 |
| | | US | 2013-0312483 | A1 | 28 November 2013 |
| | | US | 2014-0081421 | A1 | 20 March 2014 |
| | | US | 2014-0081424 | A1 | 20 March 2014 |
| | | US | 2016-0235557 | A1 | 18 August 2016 |
| | | US | 2016-0296348 | A1 | 13 October 2016 |
| | | US | 2017-0086991 | A1 | 30 March 2017 |
| | | US | 2019-0117415 | A1 | 25 April 2019 |
| | | US | 2019-0209348 | A1 | 11 July 2019 |
| | | US | 8900325 | B2 | 02 December 2014 |
| | | US | 9211201 | B2 | 15 December 2015 |
| | | US | 9345592 | B2 | 24 May 2016 |
| | | US | 9351856 | B2 | 31 May 2016 |
| | | WO | 2010-027968 | A2 | 11 March 2010 |
| | | WO | 2010-027968 | A3 | 24 June 2010 |
| KR 10-1317354 B1 | 11 October 2013 | KR | 10-2013-0056026 | A | 29 May 2013 |

Form PCT/ISA/210 (patent family annex) (July 2022)